# DEMANDE DE BREVET EUROPEEN

(11) **EP 2 184 201 A1**
(43) Date de publication de la demande: **12.05.2010**
(21) Numéro de dépôt: 09175344.2
(22) Date de dépôt: 09.11.2009
(51) Int. Cl.: B60N 2/20, B60N 2/22, B60N 2/235, B60N 2/30

(54) **Siège réglable pour un véhicule automobile**

(30) Priorité: 10.11.2008 FR 0857621
(71) Demandeur: Peugeot Citroën Automobiles SA, 78140 Vélizy-Villacoublay (FR)
(72) Inventeur: Combeau, Frédéric, 25750, DESANDANS (FR)

(57) **Abrégé**

Ce siège (14) comprend : une assise (22); un dossier (24) monté à rotation sur l'assise (22); des moyens (28) de basculement de l'assise (22) et du dossier (24) entre une position d'utilisation dans laquelle le dossier (24) est redressé par rapport à l'assise (22), et une position escamotée dans une cuvette (20) ménagée dans un plancher (18) du véhicule et dans laquelle le dossier (24) est rabattu sur l'assise (22); et des moyens de commande du basculement de l'assise (22) et du dossier (24) entre les positions respectivement d'utilisation et escamotée dans la cuvette (10).

Il comprend des moyens (100) de commande du pivotement du dossier (24) sur l'assise (22) adaptés pour régler la position angulaire du dossier (24) par rapport à l'assise (22).

## Description

La présente invention concerne un siège réglable pour un véhicule automobile, du type comprenant :
- une assise ;
- un dossier monté à rotation sur l'assise ;
- des moyens de basculement de l'assise et du dossier entre une position d'utilisation dans laquelle le dossier est redressé par rapport à l'assise, et une position escamotée dans une cuvette ménagée dans un plancher du véhicule et dans laquelle le dossier est rabattu sur l'assise ; et
- des moyens de commande du basculement de l'assise et du dossier entre les positions respectivement d'utilisation et escamotée dans la cuvette.

Actuellement, on connaît des véhicules automobiles qui possèdent trois rangées de sièges dont le rang est numéroté de 1 à 3 en allant de l'avant vers l'arrière du véhicule, c'est-à-dire une rangée de sièges avant, une rangée de sièges intermédiaires et une rangée de sièges arrière.

Les sièges de rang 1 et 2 sont placés respectivement en regard des portes avant et arrière du véhicule, tandis que les sièges de rang 3 sont positionnés dans la zone du véhicule réservée à l'espace de chargement.

Les sièges de rang 3, par siège on entend un siège individuel ou une banquette pouvant accueillir deux ou trois passagers, peuvent présenter une structure permettant leur escamotage dans une cuvette prévue dans le plancher du véhicule lorsque leur utilisation n'est pas requise. De cette manière, l'espace de chargement du véhicule retrouve sa pleine capacité.

La faculté d'escamotage des sièges de rang 3 s'avère donc extrêmement utile.

Cependant, les cinématiques existantes de tels sièges, qui permettent d'une part le pivotement du dossier sur l'assise et d'autre part leur escamotage dans une cuvette, présentent généralement une pluralité de systèmes complexes, tels que ceux décrits dans le document US 2004/0169404 A1.

L'invention a pour but de proposer un système de fabrication, de montage et d'utilisation plus simples.

A cet effet, l'invention a pour objet un siège du type précité, **caractérisé en ce qu**'il comprend des moyens de commande du pivotement du dossier sur l'assise adaptés pour régler la position angulaire du dossier par rapport à l'assise.

Le siège selon l'invention peut comporter une ou plusieurs des caractéristiques suivantes :
- les moyens de commande comportent un mécanisme à came relié à un élément de commande d'inclinaison du dossier et à un élément de commande d'escamotage de l'assise et du dossier entre la position d'utilisation et la position escamotée ;
- le mécanisme à came comprend une pièce de liaison reliée à l'élément de commande d'inclinaison et à l'élément de commande d'escamotage, une pièce formant verrou reliée à la pièce de liaison et une pièce de réglage fixée au dossier, la pièce formant verrou et la pièce de réglage s'engageant sélectivement l'une avec l'autre, et la pièce de liaison étant adaptée pour libérer la pièce formant verrou de la pièce de réglage ;
- la pièce formant verrou présente un secteur cranté et la pièce de réglage présente un secteur cranté, les secteurs crantés étant propres à s'engrener sélectivement l'un avec l'autre ;
- la pièce de réglage présente un cran de verrouillage du dossier dans une position rabattue sur l'assise ;
- le mécanisme à came comporte un ressort de rappel du dossier dans une position rabattue sur l'assise ;
- l'élément de commande d'inclinaison comporte deux molettes de réglage disposées de chaque côté du dossier et reliées par une tige transversale ; et
- l'élément de commande d'escamotage comporte un arbre transversal disposé à l'arrière de l'assise.

L'invention a également pour objet un véhicule automobile, du type comprenant un plancher dans lequel est ménagée une cuvette, **caractérisé en ce qu**'il comprend au moins un siège tel que décrit précédemment, le siège étant reçu dans la cuvette et fixé sur le plancher.

L'invention sera mieux comprise à la lecture de la description qui va suivre, donnée uniquement à titre d'exemple et faite en se référant aux dessins annexés, sur lesquels :
- la Figure 1 est une vue en perspective, de l'avant, d'une partie d'un véhicule automobile équipé de deux sièges selon l'invention ;
- la Figure 2 est une vue en perspective, de l'avant, d'un des deux sièges de la Figure 1 ;
- la Figure 3 est une vue en perspective, de l'arrière, du siège de la Figure 2;
- la Figure 4 est une vue analogue à celle de la Figure 3 montrant en détail l'avant du siège ;
- la Figure 5 est une vue en perspective, de l'intérieur, d'un mécanisme à came du siège de la Figure 2 ; et
- les Figure 6, 7 et 8 sont des vues latérales du siège de la Figure 2 respectivement dans des positions d'utilisation, tablette et escamotée.

Dans tout ce qui suit, les termes de position et d'orientation utilisés s'entendent par rapport aux orientations usuelles d'un véhicule automobile.

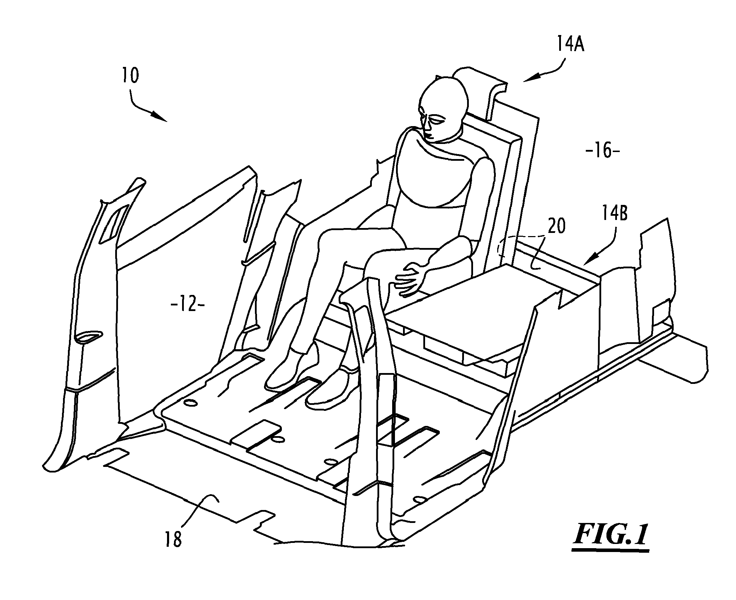

La Figure 1 représente, de façon schématique, une partie 10 d'un habitacle de véhicule automobile qui possède trois rangées de sièges numérotées de 1 à 3, une rangée de sièges avant, une rangée de sièges intermédiaires et une rangée de sièges arrière réglables.

Les sièges de rang 1 et 2 (non représentés) sont placés respectivement en face des portes avant et arrière 12 du véhicule, et les sièges 14 de rang 3, ici au nombre de deux, sont placés dans l'espace de chargement 16 du véhicule.

Le siège 14A est dans une position d'utilisation et le siège 14B est dans une position tablette comme cela sera expliqué plus en détail ultérieurement.

Chaque siège 14 peut être escamoté et pour cela, le véhicule présente dans son plancher 18 deux cuvettes 20 de rangement des sièges 14.

Les cuvettes 20 possèdent une forme sensiblement parallélépipédique.

Les sièges 14A et 14B sont identiques et un seul de ces sièges, référencé 14 ci-après, sera décrit.

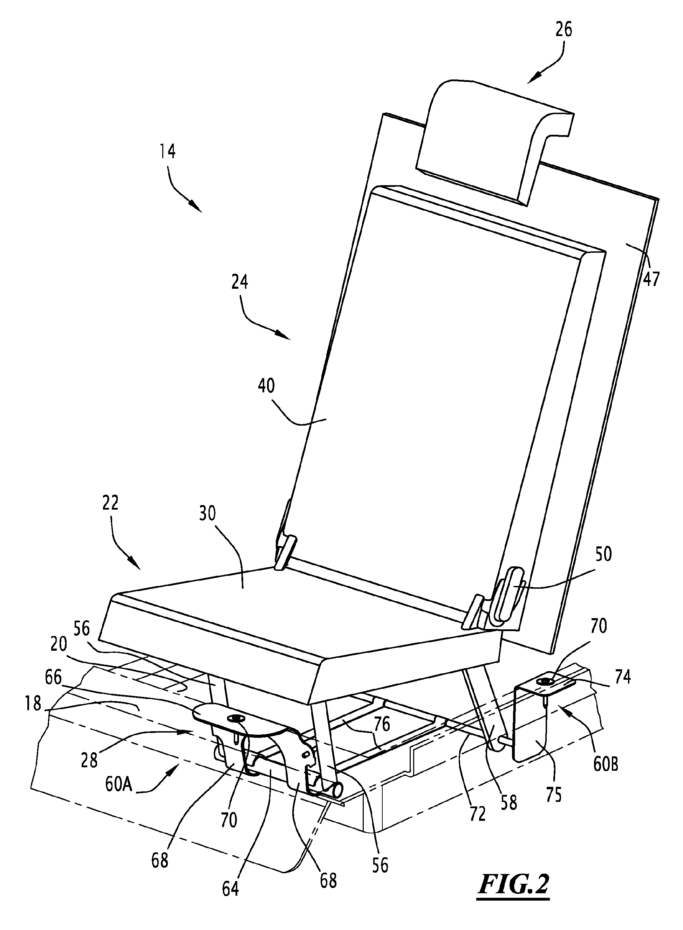

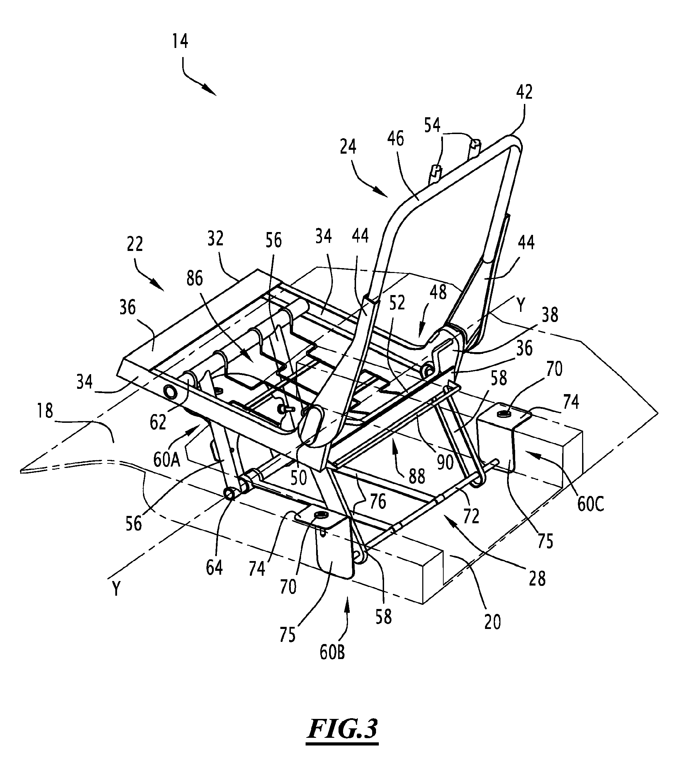

Comme on le voit mieux sur les Figures 2 et 3, le siège 14 comprend une assise 22, un dossier 24 monté rotatif sur l'assise 22, un appui-tête 26 monté sur le dossier 24 et des moyens 28 de basculement de l'assise 22 et du dossier 24.

L'assise 22 comporte un coussin d'assise 30 fixé sur une armature d'assise 32.

L'armature d'assise 32 comprend deux barres latérales 34 reliées entre elles par deux barres transversales 36.

Chaque barre latérale 34 présente une protubérance 38 sensiblement semi-circulaire qui fait saillie vers le haut de l'extrémité arrière de la barre latérale 34 correspondante.

Le dossier 24 comporte un coussin de dossier 40 fixé sur une armature de dossier 42.

L'armature de dossier 42 comprend deux montants latéraux 44 reliés entre eux par un montant transversal supérieur 46 sensiblement en forme de U.

Les montants latéraux 44 sont articulés, au niveau de leur extrémité inférieure, sur les protubérances 38 de l'armature d'assise 32 autour d'un axe transversal Y.

Une plaque 47 représentée à la Figure 2, de forme sensiblement rectangulaire, est fixée sur le dossier 24.

Le siège 14 comprend des moyens de commande du pivotement du dossier 24 sur l'assise 22.

Ces moyens de commande comprennent un élément de commande d'inclinaison 48 du dossier 24 par rapport à l'assise 22, comportant deux molettes de réglage 50 reliées par une tige transversale 52.

Les molettes 50 sont disposées de chaque côté du dossier 24, les extrémités de la tige 52 traversant les protubérances 38 et les extrémités inférieures des montants latéraux 44.

L'élément de commande d'inclinaison 48 est relié à un mécanisme à came de manière à régler la position angulaire du dossier 24 par rapport à l'assise 22, comme cela sera décrit ultérieurement.

L'appuie-tête 26 est réglable en hauteur, et monté sur le dossier 24 par l'intermédiaire de deux broches 54 fixées sur le montant transversal 46 de l'armature de dossier 42.

Les moyens 28 de basculement de l'assise 22 et du dossier 24 comportent au moins un pied avant 56, au moins un pied arrière 58 et au moins une pièce 60 de fixation de l'assise 22 sur le plancher 18 sensiblement au bord de la cuvette 20.

Dans l'exemple de réalisation représenté sur le Figures, les moyens 28 de basculement de l'assise 22 et du dossier 24 comportent deux pieds avant 56, deux pieds arrière 58 et trois pièces 60A, 60B, 60C de fixation de l'assise 22 sur le plancher 18.

Les pieds avant et arrière 56, 58 comportent chacun une première extrémité montée articulée sur l'assise 22, et une deuxième extrémité reposant sur le fond de la cuvette 20 et montée articulée sur au moins une pièce de fixation 60A, 60B, 60C.

Les pieds avant 56 présentent une forme sensiblement cylindrique et sont disposés sensiblement parallèlement.

Les pieds avant 56 sont reliés l'un à l'autre par un tube transversal supérieur 62 et un tube transversal inférieur 64 fixés respectivement sur leurs première et deuxième extrémités, les tubes 62 et 64 étant disposés sensiblement parallèlement entre eux et sensiblement perpendiculairement aux pieds avant 56.

Le tube supérieur 62 est placé transversalement sur une partie avant de l'assise 22, et monté rotatif autour de son axe principal entre les deux barres latérales 34.

Le tube supérieur 62 est de préférence un tube anti-sous-marinage.

Le tube inférieur 64 repose sur le fond à l'avant de la cuvette 20, et est monté rotatif autour de son axe principal par rapport à une pièce de fixation avant 60A.

La pièce de fixation avant 60A est formé par une équerre comportant une plaque métallique 66 prolongée par deux pattes 68 dont l'extrémité libre est recourbée sur elle-même, déterminant un passage tubulaire de manière à enserrer le tube inférieur 64.

La plaque 66 est fixée sur le plancher 18, en avant et sensiblement au bord de la cuvette 20, par un organe de fixation, tel qu'une vis 70.

Les pieds arrière 58 présentent une forme sensiblement aplatie et sont disposés sensiblement parallèlement.

Chaque pied arrière 58 est articulé, par sa première extrémité supérieure, sur l'extrémité arrière des barres latérales 34 de l'armature d'assise 32.

Les pieds arrière 58 sont également articulés, par leur deuxième extrémité inférieure qui repose sur le fond à l'arrière de la cuvette 20, autour d'une même tige transversale inférieure 72.

La tige inférieure 72 est fixée par ses extrémités à deux pièces de fixation arrière 60B, 60C disposées de part et d'autre de l'assise 22.

Chaque pièce de fixation arrière 60B, 60C est formée par une équerre comportant une plaque métallique 74 prolongée sensiblement perpendiculairement par une patte 75 fixée à l'extrémité correspondante de la tige inférieure 72.

La plaque 74 est fixée sur le plancher 18, sensiblement au bord de la cuvette 20, par un organe de fixation, tel qu'une vis 70.

Les pieds avant et arrière 56, 58 sont reliés entre eux par deux barres de liaison longitudinales 76 fixées d'une part sur l'extrémité recourbée des pattes 68 de la pièce de fixation avant 60A, et d'autre part sur la tige inférieure 72.

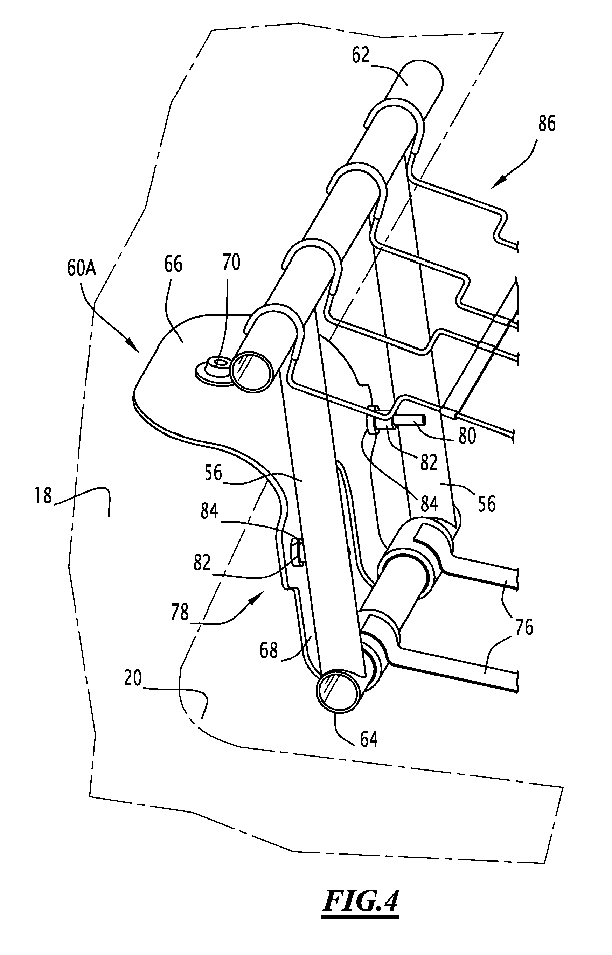

En référence à la Figure 4, le siège 14 comprend un dispositif anti-intrusion 78 permettant de retenir l'avant du siège 14 en cas de choc.

Le dispositif anti-intrusion 78 comporte deux organes anti-intrusion 80, deux fils par exemple, munis chacun d'une butée anti-bruit 82.

Chaque fil anti-intrusion 80 est soudé sur un des pieds avant 56 et traverse un orifice 84 ménagé dans une des pattes 68 de la pièce de fixation avant 60A.

L'assise 22 comprend en outre une garniture d'assise formée par un ensemble 86 de fils reliés par des sangles, l'ensemble 86 étant accroché sur le tube supérieur 62 et sur la barre transversale arrière 36.

Le siège 14 comprend des moyens de commande du basculement de l'assise 22 et du dossier 24 d'une position d'utilisation à une position escamotée, en passant par une position tablette.

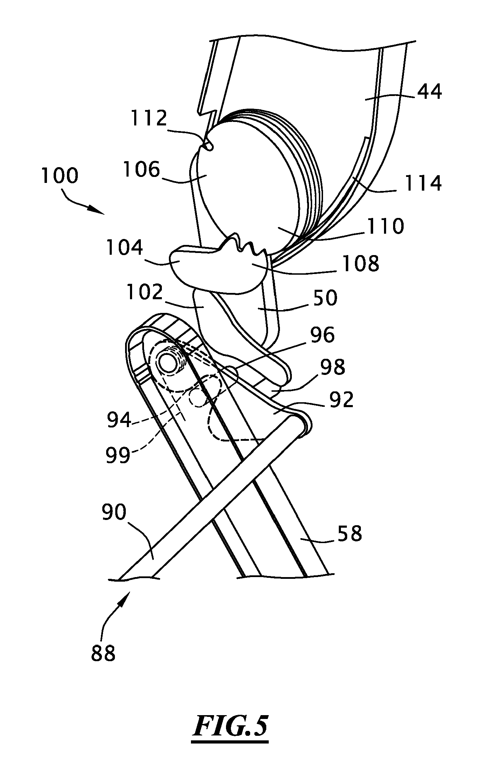

Comme représenté sur les Figures 3 et 5, ces moyens de commande comportent un élément de commande d'escamotage 88 du siège 14 relié à un mécanisme à came, qui sera décrit ultérieurement.

L'élément de commande d'escamotage 88 comporte un arbre transversal 90 disposé derrière la barre transversale 36 de l'armature d'assise 32, et prolongé à chaque extrémité par un flasque 92.

Chaque flasque 92 s'étend sensiblement perpendiculairement à l'axe de l'arbre 90, et est articulé sur le pied arrière 58 correspondant autour d'un axe transversal.

Chaque flasque 92 présente une entaille 94 qui s'emboîte sur un axe 96 prévu sur le pied arrière 58 respectif de manière à bloquer le pied arrière 58 en position.

Chaque flasque 92 possède en outre une saillie 98 qui s'étend latéralement vers l'extérieur depuis la surface du flasque 92 respectif.

Un ressort 99 de rappel de l'élément de commande d'escamotage 88 est fixé à une extrémité sur le pied arrière 58 et à l'autre extrémité sur le flasque 92, ces extrémités étant coudées et s'insérant dans des trous complémentaires ménagés sur le pied arrière 58 et sur le flasque 92.

Le ressort 99 permet de maintenir l'élément de commande d'escamotage 88 en position basse afin d'éviter un déverrouillage intempestif du pied arrière 58.

Le siège 14 comprend un mécanisme à came 100 (Figure 5) de part et d'autre de l'assise 22 permettent de régler la position angulaire du dossier 24 par rapport à l'assise 22 et de rabattre complètement le dossier 24 sur l'assise 22.

Chaque mécanisme à came 100 comporte une pièce de liaison 102, une pièce formant verrou 104 et une pièce de réglage 106.

La pièce de liaison 102 est reliée à la molette de réglage 50 de l'élément de commande d'inclinaison 48 et à la saillie 98 de l'élément de commande d'escamotage 88.

La pièce formant verrou 104 repose sur la pièce de liaison 102 et présente un secteur cranté 108.

Les pièces de liaison 102 et formant verrou 104 sont chacune montées sur et pivotent autour d'un axe respectif (non représenté) soudé sur la protubérance 38 de l'armature d'assise 32.

La pièce de réglage 106 est montée sur l'extrémité inférieure du montant latéral 44 de l'armature de dossier 42.

La pièce de réglage 106 possède une forme de disque présentant un secteur cranté 110 propre à s'engrener sélectivement avec le secteur cranté 108 de la pièce formant verrou 104.

La pièce de réglage 106 présente en outre un cran 112 de verrouillage du dossier 24 dans une position rabattue sur l'assise 22.

Le mécanisme à came comporte en outre un ressort 114 de rappel du dossier 24 en appui sur l'extrémité inférieure du montant latéral 44 et sur la protubérance 38 de l'armature d'assise 32, à proximité de la pièce de réglage 106.

Le ressort 114 permet de compenser la masse du dossier 24 et de faciliter sa rotation vers le dos du passager.

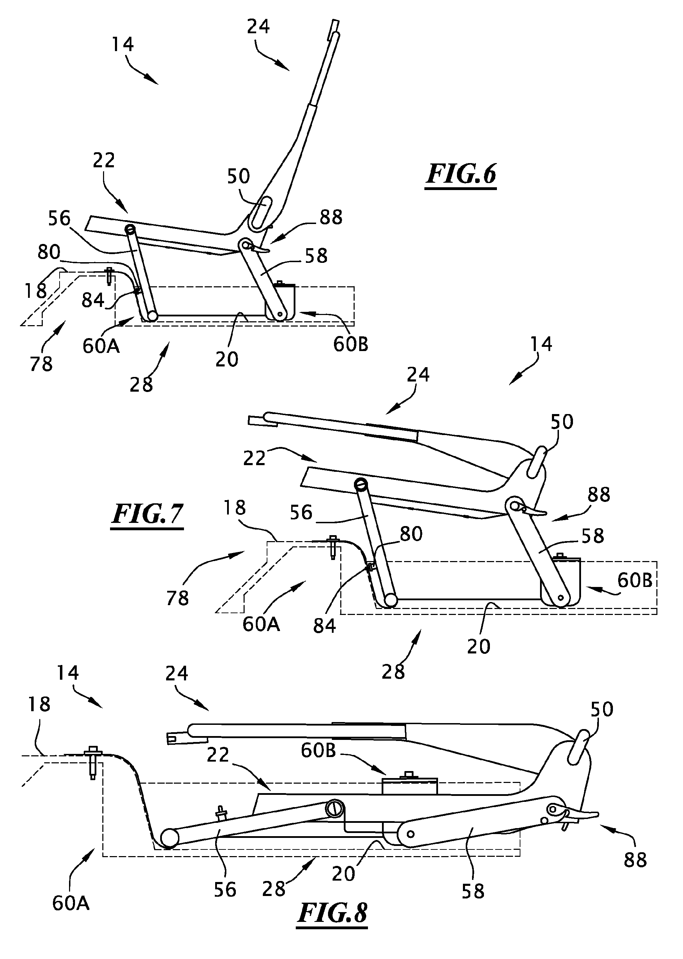

Le fonctionnement du siège 14 va maintenant être décrit en référence aux Figures 6, 7 et 8.

Initialement, le siège 14 est dans une position d'utilisation (Figure 6) permettant à un utilisateur de s'asseoir sur le siège 14.

Dans la position d'utilisation, le dossier 24 est redressé par rapport à l'assise 22, formant sensiblement un angle de 90° avec l'assise 22.

Le ressort 114 est comprimé par l'extrémité inférieure du montant latéral 44 et par la protubérance 38.

Les pieds avant 56 s'étendent sensiblement verticalement, légèrement inclinés par rapport à la verticale de manière à assurer la stabilité de l'assise 22.

Les fils anti-intrusion 80 traversent les orifices 84 de la pièce de fixation avant 60A, activant de ce fait le dispositif anti-intrusion 78 en cas de choc.

Les pieds arrière 58 s'étendent sensiblement verticalement, légèrement inclinés par rapport à la verticale de manière à assurer la stabilité de l'assise 22.

L'assise 22 étant légèrement inclinée vers l'arrière, les pieds arrière 58 sont plus courts que les pieds avant 56, et légèrement plus inclinés par rapport à la verticale que les pieds avant 56 de manière à rattraper l'angle de rotation effectué par les pieds avant 56 lors du passage de la position d'utilisation à la position escamotée.

Les pieds arrière 58 sont verrouillés en position par l'élément de commande d'escamotage 88, les entailles 94 des flasques 92 s'emboîtant sur les axes 96.

Dans la position d'utilisation, l'utilisateur du siège 14 a la possibilité de régler l'inclinaison du dossier 24 par rapport à l'assise 22 pour un confort optimal.

Dans ce cas, l'utilisateur tourne la molette de réglage 50, ce qui entraîne la pièce de liaison 102 (Figure 5) et engrène les secteurs crantés 108, 110 des pièces formant verrou et de réglage 104, 106.

Le dossier 24 bascule ainsi vers l'avant ou vers l'arrière, selon le sens de rotation de la molette 50.

Lorsque l'utilisateur désire augmenter la capacité de l'espace de chargement 16 du véhicule, il procède de la manière suivante.

L'utilisateur règle tout d'abord la hauteur de l'appui-tête 26 de sorte que ce dernier soit disposé à proximité du dossier 24.

Ensuite, l'utilisateur actionne l'élément de commande d'escamotage 88 en l'agrippant manuellement et en le soulevant légèrement vers le haut.

Cette action fait basculer la pièce de liaison 102 (Figure 5) qui libère la pièce formant verrou 104 de la pièce de réglage 106.

Le ressort 114 de rappel du dossier 24 fait basculer le dossier 24 vers l'avant ; le dossier 24 est alors rabattu sur l'assise 22.

Le dossier 24 est ensuite verrouillé en position par le cran de verrouillage 112 de la pièce de réglage 106 qui s'engage avec le secteur cranté 108 de la pièce formant verrou 104.

Le siège 14 est ainsi dans une position tablette (Figure 7), permettant à l'utilisateur de poser des objets sur la plaque 47 qui se retrouve sensiblement horizontale.

Pour escamoter complètement le siège 14 dans la cuvette 20, l'utilisateur soulève l'élément de commande d'escamotage 88 de manière à libérer les axes 96 des entailles 94.

Les pieds arrière 58 sont alors déverrouillés et libres de pivoter.

En tirant simplement l'élément de commande d'escamotage 88 vers l'arrière, les pieds avant et arrière 56, 58 effectuent un mouvement de rotation vers l'arrière jusqu'à reposer sur le fond de la cuvette 20.

Le siège 14 se retrouve alors dans la position escamotée (Figure 8), le dossier 24 étant rabattu sur l'assise 22 et les pieds avant et arrière 56, 58 s'étendant sensiblement horizontalement.

Dans la position escamotée, la plaque 47 fixée sur le dossier 24 obture la cuvette 20 et affleure sensiblement le plancher 18.

Le siège 14 est rangé dans la cuvette 20, augmentant ainsi la capacité de l'espace de chargement 16 du véhicule.

Pour relever le siège 14 de la position escamotée à la position d'utilisation, l'utilisateur tire, au moyen par exemple d'une sangle prévue sur la partie supérieure du dossier 24, le siège 14 vers le haut et vers l'avant.

Le siège 14 se retrouve dans la position tablette de la Figure 7.

L'utilisateur actionne alors la molette de réglage 50 pour déverrouiller le dossier 24 et relève le dossier 24.

Le siège 14 est dans la position d'utilisation de la Figure 6.

L'invention propose donc un siège pouvant être rangé dans une cuvette d'un plancher de véhicule en un seul mouvement et d'une seule main, et dont la cinématique d'escamotage est très simple.

Selon l'invention, le dispositif anti-intrusion est complètement intégré au siège, ce qui permet de limiter les dispersions sur la caisse du véhicule lors du montage du siège sur le plancher.

De plus, le montage du siège sur le plancher du véhicule requiert un nombre minimum de pièces de fixation, ici au nombre de trois. Ces pièces de fixation peuvent être facilement fixées par un opérateur sur le plancher du véhicule. En effet, il lui suffit de poser le siège dans la cuvette correspondante et de procéder à la fixation de ces pièces de fixation sur le plancher.

En outre, l'espace de chargement du véhicule ne nécessitant plus d'être optimisé lorsque le siège est utilisé, les largeurs ainsi que les longueurs d'assise et de dossier peuvent être augmentées.

En variante, le siège est un siège de rang 2.

En variante encore, l'invention s'applique à une banquette à deux ou trois places, la forme de la cuvette étant adaptée en conséquence pour recevoir la banquette.

Toujours en variante, la plaque fixée sur le dossier comporte des équipements divers, tels qu'un accoudoir et/ou un porte-gobelet, destinés notamment à un utilisateur d'un siège adjacent au siège mis dans la position tablette.

Dans une autre variante, la pièce de réglage 106 ne possède pas de cran de verrouillage, la masse du dossier 24 suffisant à maintenir le dossier 24 rabattu sur l'assise 22.

## Revendications

1. Siège (14) réglable pour un véhicule automobile, du type comprenant :
- une assise (22) ;
- un dossier (24) monté à rotation sur l'assise (22) ;
- des moyens (28) de basculement de l'assise (22) et du dossier (24) entre une position d'utilisation dans laquelle le dossier (24) est redressé par rapport à l'assise (22), et une position escamotée dans une cuvette (20) ménagée dans un plancher (18) du véhicule et dans laquelle le dossier (24) est rabattu sur l'assise (22) ; et
- des moyens de commande du basculement de l'assise (22) et du dossier (24) entre les positions respectivement d'utilisation et escamotée dans la cuvette (20),
**caractérisé en ce qu'**il comprend des moyens de commande du pivotement du dossier (24) sur l'assise (22) adaptés pour régler la position angulaire du dossier (24) par rapport à l'assise (22).

2. Siège (14) selon la revendication 1, **caractérisé en ce que** les moyens de commande comportent un mécanisme à came (100) relié à un élément de commande d'inclinaison (48) du dossier (24) et à un élément de commande d'escamotage (88) de l'assise (22) et du dossier (24) entre la position d'utilisation et la position escamotée.

3. Siège (14) selon la revendication 2, **caractérisé en ce que** le mécanisme à came (100) comprend une pièce de liaison (102) reliée à l'élément de commande d'inclinaison (48) et à l'élément de commande d'escamotage (88), une pièce formant verrou (104) reliée à la pièce de liaison (102) et une pièce de réglage (106) fixée au dossier (24), la pièce formant verrou (104) et la pièce de réglage (106) s'engageant sélectivement l'une avec l'autre, et la pièce de liaison (102) étant adaptée pour libérer la pièce formant verrou (104) de la pièce de réglage (106).

4. Siège (14) selon la revendication 3, **caractérisé en ce que** la pièce formant verrou (104) présente un secteur cranté (108) et la pièce de réglage (106) présente un secteur cranté (110), les secteurs crantés (108, 110) étant propres à s'engrener sélectivement l'un avec l'autre.

5. Siège (14) selon la revendication 3 ou 4, **caractérisé en ce que** la pièce de réglage (106) présente un cran (112) de verrouillage du dossier (24) dans une position rabattue sur l'assise (22).

6. Siège (14) selon l'une quelconque des revendications 2 à 5, **caractérisé en ce que** le mécanisme à came (100) comporte un ressort (114) de rappel du dossier (24) dans une position rabattue sur l'assise (22).

7. Siège (14) selon l'une quelconque des revendications 2 à 6, **caractérisé en ce que** l'élément de commande d'inclinaison (48) comporte deux molettes de réglage (50) disposées de chaque côté du dossier (24) et reliées par une tige transversale (52).

8. Siège (14) selon l'une quelconque des revendications 2 à 7, **caractérisé en ce que** l'élément de commande d'escamotage (88) comporte un arbre transversal (90) disposé à l'arrière de l'assise (22).

9. Véhicule automobile, du type comprenant un plancher (18) dans lequel est ménagée une cuvette (20), **caractérisé en ce qu'**il comprend au moins un siège (14) selon l'une quelconque des revendications précédentes, le siège (14) étant reçu dans la cuvette (20) et fixé sur le plancher (18).
